# EUROPÄISCHE PATENTSCHRIFT

(11) **EP 2 471 338 B1**
(45) Veröffentlichungstag und Bekanntmachung des Hinweises auf die Patenterteilung: **22.03.2017**
(21) Anmeldenummer: 10749472.6
(22) Anmeldetag: 26.08.2010
(51) Int. Cl.: H05B 3/58

(54) **EINRICHTUNG ZUR KONTAKTIERUNG EINES BEHEIZBAREN SCHLAUCHS**
DEVICE FOR CONTACTING A HEATABLE HOSE
DISPOSITIF DE CONNEXION ÉLECTRIQUE D'UN TUYAU CHAUFFÉ

(30) Priorität: 28.08.2009 DE 202009011719 U
(43) Veröffentlichungstag der Anmeldung: 04.07.2012
(73) Patentinhaber: Eugen Forschner GmbH, 78549 Spaichingen (DE)
(72) Erfinder: CHALOUPKA, Thomas, 78549 Spaichingen (DE)
(74) Vertreter: Wiese, Gerhard
(86) Internationale Anmeldenummer: PCT/EP2010/005267
(87) Internationale Veröffentlichungsnummer: WO 2011/023395

(56) Entgegenhaltungen:
- DE-U1-202007 010 865
- JP-A- 2007 022 908
- JP-A- 2007 088 324
- US-A- 3 534 148
- US-B1- 6 530 776

## Beschreibung

Die Erfindung betrifft einen beheizbaren Schlauch mit einer Einrichtung zur Kontaktierung gemäß dem Oberbegriff des Anspruchs 1.

Zur elektrischen Kontaktierung beheizter Schläuche kann zwischen den Kontaktierungsarten nach DE 10 2005 048 943 A1 und WO 2006/042587 A1 unterschieden werden. Da die Kontaktierung nach DE 10 2005 048 943 A1 nicht den Anforderungen der Nutzfahrzeug- und Automobilindustrie entspricht, wird in diesem Bereich ausschließlich die Kontaktierung nach WO 2006/042587 A1 angewendet. Hauptanwendungsbereich sind zurzeit elektrisch beheizte Schläuche für Harnstoff- Wasser- Gemisch. Nach den Lastenheften der Industrie müssen die elektrischen Verbindungen nach den Anforderungen der Norm IP69K abgedichtet sein. Dies macht unter anderem den Einsatz eines Drallschutzes in Form z.B, eines Verteilerstücks erforderlich. Die zunehmende Beschränkung des Bauraums erfordert ein möglichst kleines Gehäuse für den Drallschutz. Dies führt zu einem sehr kleinen Biegeradius der Heizleiter im Bereich der Litzenherausführung aus dem beheizten Schlauch und im anschließenden Bereich der Kontaktierung. In Folge der thermischen Belastung führt ein zu geringer Biegeradius jedoch zur Schädigung der Isolation sowie zu Litzenbrüchen. Ein direktes Verschweißen der aus Edelstahl gefertigten Heizleiter mit der Kupferlitze zum Bordnetzanschluss ist wegen der unterschiedlichen Schmelzpunkte der Materialien nicht möglich.

Im Bereich der elektrischen Kontaktierung eines beheizbaren Schlauchsystems, die typischer Weise im Bereich einer Schlauchkupplung (Konnektor) angeordnet ist, wird das Schlauchsystem darüber hinaus bislang unzureichend beheizt.

Aufgabe der Erfindung ist die Bereitstellung eines beheizbaren Schlauchs mit einer verbesserten Einrichtung zur Kontaktierung.

Diese Aufgabe wird durch die Merkmale des Anspruchs 1 gelöst. Vorteilhafte Ausgestaltungen der Erfindung sind in den Unteransprüchen angegeben.

Die erfinderische Lösung sieht vor, dass ein Formteil auf der einen Seite eine stoffschlüssige Verbindung, insbesondere eine Schweißverbindung zur Verbindung mit dem Heizleiter und auf der anderen Seite eine formschlüssige Verbindung, insbesondere eine Steckverbindung oder Klemmverbindung für einen mit der Kupferlitze des Bordnetzes verbundenen Stecker bereitstellt. Durch Einsatz des Schweißverfahrens werden die bekannten, in der WO 2006/042587 A1 eingehend beschriebenen Probleme beim Vercrimpen von Stahllitzen vermieden.

Das Formteil ist bevorzugt als Stanzgitter ausgeführt und ist dadurch kostengünstig in großen Stückzahlen herstellbar. Das Stanzgitter weist bevorzugt eine U-Form auf, wobei die Schweißverbindung zum Heizleiter von einem ersten Schenkel des U und die Steckverbindung vom zweiten Schenkel des U bereitgestellt werden. Die U-Form hat den Vorteil, dass ein Biegen der Litze des Heizleiters und der Kupferlitze des Bordnetzes weitestgehend vermieden wird.

Für das Formteil bzw. das Stanzgitter wird das gleiche Material oder eine Materialzusammensetzungen mit ähnlichem Schmelzpunkt wie dem der Heizlitze eingesetzt. Das Formteil bzw. Stanzgitter besteht somit bevorzugt aus einem Edelstahl mit einem Schmelzpunkt, der in etwa dem des Materials des Heizleiters entspricht.

Die Kontaktierung der Anschlüsse zum Bordnetz erfolgt bevorzugt mittels branchenüblichen Flachsteckhülsen. Die Materialstärke des Formteils bzw. des Stanzgitters wird entsprechend bevorzugt in Abhängigkeit von der lichten Weite der Flachsteckhülse gewählt.

Der Heizleiter ist bevorzugt in Form einer Wendel ausgebildet und besteht bevorzugt aus einem Widerstandsdraht. Eine Ausbildung des Formteils bzw. des Stanzgitters aus einem Widerstandsmaterial ermöglicht vorteilhaft dessen gleichzeitige Verwendung zur Beheizung des Kontaktbereichs. Durch seinen höheren elektrischen Widerstand ist das Material des Stanzgitters darüber hinaus auch als Heizeinrichtung ("Hotspot") für einen am Ende des Schlauches angeordneten Konnektor ausgebildet. Die Wärmeleitung vom Hotspot zum Konnektor wird bevorzugt durch wenigstens ein am Konnektor angeordnetes, in Wärmeleitender Verbindung mit dem Formteil stehendes Wärmeleitendes Medium verbessert. Das Wärmeleitende Medium wird von einer Vergussmasse aus Kunststoff mit hoher thermischer Leitfähigkeit, wie beispielsweise auf Polyurethanbasis, und/oder von einer Wärmeleitfolie, beispielsweise aus Aluminium, gebildet.

Nachfolgend wird ein Ausführungsbeispiel eines erfindungsgemäßen beheizbaren Schlauchs unter Bezugnahme auf die Zeichnungen näher erläutert. Es zeigt:
- Fig. 1: ein bekannter beheizbaren Schlauch mit einer Kontaktierungseinrichtung;
- Fig. 2: eine teilweise aufgebrochene Ansicht durch ein Ende eines beheizbaren Schlauchs mit einer Kontaktierungseinrichtung gemäß der Erfindung, und
- Fig. 3: eine Variante zur Fig. 2 mit einer Vergussmasse und einer Wärmeleitfolie im Bereich eines Konnektors.

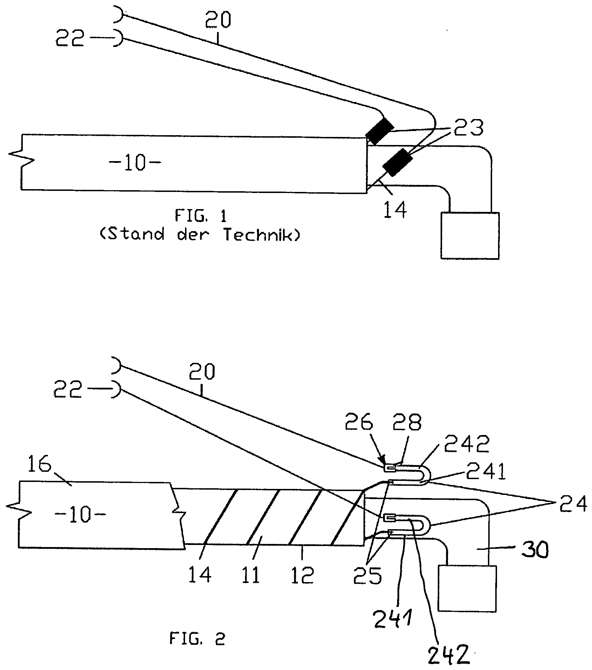

Der in Figur 1 schematisch dargestellte beheizbare Schlauch 10 wird gebildet von einem inneren Schlauchteil 11, das mit seiner Innenwand einen Fluid führenden Kanal begrenzt. Die Wandung 12 des inneren Schlauchteils 11 wird gemäß einer ersten Alternative bevorzugt von einem Gummi (Naturkautschuk (NR)) oder einem Gummi ähnlichen Kunststoff, wie beispielsweise Ethylen-Propylen-Dien-Kautschuk (EPDM), Ethylen-Acrylat-Kautschuk (EAM), Fluorkarbon-Kautschuk (FKM), Acrylat-Kautschuk (ACM), Acrylnitril-Butadien-Kautschuk (NBR), Hydriertem Nitril-Kautschuk (HNBR), Carboxylat-Nitril-Kautschuk (XHNBR), Ethyl-Vinyl-Acetat (EVA), Chlorsulfonyl-Polyäthylen-Kautschuk (CSM), SilikonKautschuk (VMQ, MVQ), Fluor-Silikon-Kautschuk (FVMQ, MFQ), Chlorhydrin-Kautschuk (CO), Epichlorhydrin-Kautschuk (ECO), Polychlorpren-Kautschuk (CR), einkomponentigem Polyurethan (PU) oder einer Kombination oder einem Verschnitt der vorstehend genannten Stoffe, gebildet. Gemäß einer weiteren Alternative wird die Wandung 12 aus einem Diffusionssicheren, insbesondere Polyamid basierten Kunststoff gebildet.

In die Wandung 12 kann optional ein Verstärkungsgewebe aus einem textilen Material, aus Kunststoff- oder Carbonfasern integriert sein.

Auf dem Außenmantel der Wandung 12 sitzt ein bevorzugt wendelförmig ausgebildeter Heizleiter 14, der beispielsweise bei der Herstellung des beheizbaren Schlauchs 10 auf den Außenmantel aufgeschoben wird. Der Heizleiter 14 besteht beispielsweise aus einem Widerstandsdraht, der bevorzugt aus Edelstahl gebildet ist.

Der Heizleiter 14 wird seinerseits außen von einer thermisch isolierenden Außenschicht 16 umgeben. Die Außenschicht 16 wird gemäß einer ersten Alternative von einem technischen Garn, wie beispielsweise Glasfaser, gebildet. Das Aufbringen der Außenschicht 16 erfolgt bevorzugt durch Umweben des inneren Schlauchteils 11 mit dem auf dessen Außenmantel aufgebrachten Heizleiter 14 mittels des technischen Garns. Gemäß einer zweiten Alternative ist die aus einem Kunststoff bestehende Außenschicht 16 anvulkanisiert, ohne jedoch eine Verbindung mit dem Heizleiter 14 einzugehen, so dass im Recyclingprozess inneres Schlauchteil 11, Heizleiter 14 und Außenschicht 16 einfach voneinander getrennt werden können.

Beim Stand der Technik gemäß Fig. 1 sind die an einem Ende aus dem beheizbaren Schlauch 10 austretenden Heizleiter 14 aus Edelstahllitzen durch Crimp-Verbindungen 23 mit elektrischen Leitern 20 aus Kupferlitzen verbunden. Die elektrischen Leiter 20 sind mittels Anschlussklemmen 22 mit einer nicht dargestellten Spannungsquelle, insbesondere dem Bordnetz eines Fahrzeugs mit dessen Batterie verbunden.

Im Gegensatz dazu werden bei der Erfindung gemäß Fig. 2 die bevorzugt spiralförmig die äußere Wandung 12 des inneren Schlauchteils 11 umgebenden Heizleiter 14 mit ihren Enden an einem ersten Schenkel 241 eines U-förmigen Formteils 24 mittels jeweils einer stoffschlüssigen Verbindung, insbesondere einer Schweißverbindung 25 verbunden. Das Formteil 24 ist bevorzugt als Stanzteil aus einem Edelstahlblech gefertigt. Da die Schmelzpunkte des Materials der Heizleiter 14 und des Formteils 24 gleich oder sehr ähnlich sind, ist das Schweißen problemlos möglich und eine dauerhaft korrosionsfreie Schweißverbindung gewährleistet.

Der andere Schenkel 242 des U-förmigen Formteils 24 stellt eine formschlüssige Verbindung, insbesondere eine Steckverbindung 26 bereit, auf der ein mit dem elektrischen Leiter 20 verbundener Flachstecker 28 durch Aufstecken mit einem Klemmsitz befestigbar ist.

Die U-förmige Ausbildung des Formteils 24 sorgt dafür, dass sowohl die Enden der Heizleiter 14 als auch die Enden der elektrischen Leiter 20 ohne scharfe Biegeradien verlegt und angeschlossen werden können. Ein Bruch der Drähte bzw. Litzen wird dadurch wirksam verhindert.

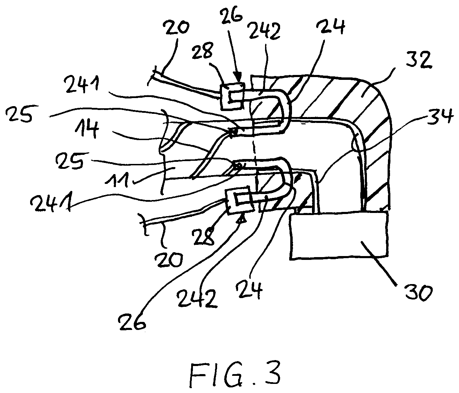

Das Formteil 24 kann in einer besonders bevorzugten Ausführungsform gemäß Fig. 3 auch in eine Vergussmasse 32 einer auch als Konnektor 30 bezeichneten Mediumkupplung eingebettet werden. Dabei sind die ersten Schenkel 241 der Formteile 24 bevorzugt so am Konnektor 30 gelagert, dass sie von der Vergussmasse 32 umgeben sind, während die zweiten Schenkel 242 bevorzugt aus der Vergussmasse 32 herausgeführt sind, so dass die formschlüssige Verbindung 26 mittels des Flachsteckers 26 jederzeit hergestellt oder bei Bedarf getrennt werden kann. Zur Verbesserung der Wärmeleitung in den Konnektor 30 kann alternativ oder ergänzend zur Vergussmasse 32 eine Wärmeleitfolie 34 vorgesehen sein, die mit dem Formteil 24 - zumindest mit dessen erstem Schenkel 241 - in Wärmeleitender Verbindung steht und die bei Stromdurchfluss vom Formteil 24 als "Hotspot" erzeugte Wärme auf den Konnektor 30 übertragt.

Durch den zweilagigen Aufbau des beheizbaren Schlauchs 10 aus dem inneren Schlauchteil 11 und der Außenschicht 16 können die Materialien so gewählt werden, dass das innere Schlauchteil 11 gut Wärme leitend ist, während die Außenschicht 16 eine gute thermische Isolation ermöglicht. Hierdurch wird eine effiziente Energienutzung beim Beheizen des Fluids erreicht Für den RecyclingProzess lässt sich der eine separate Zwischenschicht zwischen dem inneren Schlauchteil 11 und Außenschicht 16 bildende wendelförmige Heizleiter 14 retativ leicht von den übrigen Kunststoff-beziehungsweise Kautschuk-Materialien entfernen. Dadurch ist zu den positiven Eigenschaften eines prozesssicheren, dauerhaft dichten, Energie-effizienten, auch für enge Biegeradien geeigneten beheizbaren Schlauchs 10 auch eine erhöhte Umweltfreundlichkelt gegeben.

### Bezugszeichenliste

- 10: Beheizbarer Schlauch
- 11: inneres Schlauchteil (von 10)
- 12: (äußere) Wandung (von 11)
- 14: Heizleiter
- 16: Außenschicht (von 10)
- 20: elektrischer Leiter
- 22: Anschlussklemme
- 23: Crimp-Verbindung
- 24: Formteil
- 241: erster Schenkel (von 24)
- 242: zweiter Schenkel (von 24)
- 25: stoffschlüssige Verbindung (Schweißverbindung)
- 26: formschlüssige Verbindung (Steckverbindung)
- 28: Flachstecker
- 30: Konnektor
- 32: Vergussmasse
- 34: Wärmeleitfolie

## Patentansprüche

1. Beheizbarer Schlauch (10) mit einem Fluid führenden inneren Schlauchteil (11), dessen Wandung (12) mittels wenigstens eines von einer thermisch isolierenden Außenschicht (16) umgebenen elektrischen Heizleiters (14) beheizbar ist, wobei der Heizleiter (14) durch eine Einrichtung zur Kontaktierung mit wenigstens einem elektrischen Leiter (20) zur Anbindung an eine Spannungsquelle verbunden ist.
**dadurch gekennzeichnet, dass**
- die Einrichtung zur Kontaktierung von einem Formteil (24) gebildet wird,
- das an einem Ende (241) eine stoffschlüssige Verbindung (25) zum elektrischen Heizleiter (14) aufweist, und
- das am anderen Ende (242) eine formschlüssige Verbindung (26) zum elektrischen Leiter (20) aufweist.

2. Beheizbarer Schlauch (10) nach Anspruch 1, **dadurch gekennzeichnet, dass** die stoffschlüssige Verbindung von einer Schweißverbindung (25) gebildet wird.

3. Beheizbarer Schlauch (10) nach Anspruch 1, **dadurch gekennzeichnet, dass** die formschlüssige Verbindung von einem Steckkontakt (26) gebildet wird.

4. Beheizbarer Schlauch (10) nach wenigstens einem der vorhergehenden Ansprüche, **dadurch gekennzeichnet, dass** das Formteil (24) U-förmig ausgebildet ist, wobei an einem Schenkel (241) die stoffschlüssige Verbindung (25) und am anderen Schenkel (242) die formschlüssige Verbindung (26) angeordnet ist.

5. Beheizbarer Schlauch (10) nach wenigstens einem der vorhergehenden Ansprüche, **dadurch gekennzeichnet, dass** das Formteil (24) aus Edelstahl ausgebildet ist.

6. Beheizbarer Schlauch (10) nach wenigstens einem der vorhergehenden Ansprüche, **dadurch gekennzeichnet, dass** das Formteil (24) als Stanzteil aus einem Flachmaterial ausgebildet ist.

7. Beheizbarer Schlauch (10) nach wenigstens einem der vorhergehenden Ansprüche, **dadurch gekennzeichnet, dass** der Heizleiter (14) in Form einer Wendel ausgebildet ist.

8. Beheizbarer Schlauch (10) nach wenigstens einem der vorhergehenden Ansprüche, **dadurch gekennzeichnet, dass** der Heizleiter (14) von einem Widerstandsdraht gebildet ist.

9. Beheizbarer Schlauch (10) nach wenigstens einem der vorhergehenden Ansprüche, **dadurch gekennzeichnet, dass** das Formteil (24) von einem Widerstandsmaterial gebildet ist und dadurch zur Beheizung der Einrichtung zur Kontaktierung (24) verwendbar ist.

10. Beheizbarer Schlauch (10) nach einem der vorhergehenden Ansprüche, **dadurch gekennzeichnet, dass** das Formteil (24) an einem mit dem beheizbaren Schlauch (10) verbundenen Konnektor (30) gelagert ist.

11. Beheizbarer Schlauch (10) nach Anspruch 10, **dadurch gekennzeichnet, dass** das die stoffschlüssig Verbindung (25) aufweisenden Ende (241) des Formteils (24) mit wenigstens einem am Konnektor (30) angeordneten, Wärme leitenden Medium (32, 34) in Wärme leitender Verbindung steht.

12. Beheizbarer Schlauch (10) nach Anspruch 11, **dadurch gekennzeichnet, dass** das Wärme leitende Medium (32) von einer Vergussmasse (32) gebildet wird.

13. Beheizbarer Schlauch (10) nach Anspruch 11 oder 12, **dadurch gekennzeichnet, dass** das Wärme leitende Medium (32) von einer Wärmeleitfolie (34) gebildet wird.

## Claims

1. Heatable hose (10) having a fluid-carrying inner hose part (11), the wall (12) of which can be heated by means of at least one electric heating conductor (14) surrounded by a thermally insulating outer layer (16), the heating conductor (14) being connected by a device for making contact with at least one electric conductor (20) for attachment to a power source,
**characterized in that**
- the device for making contact is formed by a moulding (24),
- which at one end (241) has an integral connection (25) to the electric heating conductor (14), and
- which at the other end (242) has a form-fitting connection (26) to the electric conductor (20).

2. Heatable hose (10) according to Claim 1, **characterized in that** the integral connection is formed by a welded connection (25).

3. Heatable hose (10) according to Claim 1, **characterized in that** the form-fitting connection is formed by a plug-in contact (26).

4. Heatable hose (10) according to at least one of the preceding claims, **characterized in that** the moulding (24) is formed in a U shape, the integral connection (25) being arranged on one leg (241) and the form-fitting connection (26) being arranged on the other leg (242).

5. Heatable hose (10) according to at least one of the preceding claims, **characterized in that** the moulding (24) is formed from stainless steel.

6. Heatable hose (10) according to at least one of the preceding claims, **characterized in that** the moulding (24) is formed as a stamped part from a flat material.

7. Heatable hose (10) according to at least one of the preceding claims, **characterized in that** the heating conductor (14) is formed in the shape of a helix.

8. Heatable hose (10) according to at least one of the preceding claims, **characterized in that** the heating conductor (14) is formed from a resistance wire.

9. Heatable hose (10) according to at least one of the preceding claims, **characterized in that** the moulding (24) is formed from a resistance material and, as a result, can be used for heating the device for making contact (24).

10. Heatable hose (10) according to one of the preceding claims, **characterized in that** the moulding (24) is mounted on a connector (30) connected to the heatable hose (10).

11. Heatable hose (10) according to Claim 10, **characterized in that** the end (241) of the moulding (24) having the integral connection (25) is thermally conductively connected to at least one thermally conductive medium (32, 34) arranged on the connector (30).

12. Heatable hose (10) according to Claim 11, **characterized in that** the thermally conductive medium (32) is formed from a potting compound (32).

13. Heatable hose (10) according to Claim 11 or 12, **characterized in that** the thermally conductive medium (32) is formed from a thermally conductive film (34).

## Revendications

1. Tuyau chauffant (10) comportant une partie intérieure de tuyau (11) conduisant un fluide, dont la paroi (12) peut être chauffée au moyen d'au moins un conducteur chauffant électrique (14) entouré par une couche extérieure isolante (16), le conducteur chauffant électrique (14) étant relié par un dispositif de mise en contact à au moins un conducteur électrique (20) pour le raccordement à une source de tension,
**caractérisé en ce que**
- le dispositif de mise en contact est formé par une pièce profilée (24),
- qui présente à une extrémité (241) une liaison par coopération de matières (25) avec le conducteur chauffant électrique (14), et
- qui présente à l'autre extrémité (242) une liaison par coopération de formes (26) avec le conducteur électrique (20).

2. Tuyau chauffant (10) selon la revendication 1, **caractérisé en ce que** la liaison par coopération de matières est formée par une soudure (25).

3. Tuyau chauffant (10) selon la revendication 1, **caractérisé en ce que** la liaison par coopération de formes est formée par un contact à fiche (26).

4. Tuyau chauffant (10) selon au moins l'une des revendications précédentes, **caractérisé en ce que** la pièce profilée (24) est réalisée en forme de U, la liaison par coopération de matières (25) étant disposée sur une branche (241) et la liaison par coopération de formes (26) sur l'autre branche (242).

5. Tuyau chauffant (10) selon au moins l'une des revendications précédentes, **caractérisé en ce que** la pièce profilée (24) est réalisée en acier inoxydable.

6. Tuyau chauffant (10) selon au moins l'une des revendications précédentes, **caractérisé en ce que** la pièce profilée (24) est réalisée sous la forme d'une pièce découpé dans un matériau plat.

7. Tuyau chauffant (10) selon au moins l'une des revendications précédentes, **caractérisé en ce que** le conducteur chauffant (14) est réalisé sous la forme d'une spirale.

8. Tuyau chauffant (10) selon au moins l'une des revendications précédentes, **caractérisé en ce que** le conducteur chauffant (14) est formé par un fil résistant.

9. Tuyau chauffant (10) selon au moins l'une des revendications précédentes, **caractérisé en ce que** la pièce profilée (24) est formée par un matériau résistant et peut donc être utilisée pour chauffer le dispositif de mise en contact (24).

10. Tuyau chauffant (10) selon au moins l'une des revendications précédentes, **caractérisé en ce que** la pièce profilée (24) est montée sur un connecteur (30) relié au tuyau chauffant (10).

11. Tuyau chauffant (10) selon la revendication 10, **caractérisé en ce que** l'extrémité (241) de la pièce profilée (24) présentant la liaison par coopération de matières (25) est en liaison thermoconductrice avec au moins un milieu thermoconducteur (32, 34) disposé sur le connecteur (30).

12. Tuyau chauffant (10) selon la revendication 11, **caractérisé en ce que** le milieu thermoconducteur (32) est formé par une masse de scellement (32).

13. Tuyau chauffant (10) selon la revendication 11 ou 12, **caractérisé en ce que** le milieu thermoconducteur (32) est formé par un film thermoconducteur (34).
